# EUROPÄISCHE PATENTSCHRIFT

(11) **EP 0 848 188 B1**
(45) Veröffentlichungstag und Bekanntmachung des Hinweises auf die Patenterteilung: **04.12.2002**
(21) Anmeldenummer: 97121945.6
(22) Anmeldetag: 13.12.1997
(51) Int. Cl.: F16G 11/12, B60P 7/08

(54) **Spannvorrichtung zum Spannen von Gurten oder dergleichen**
Device for tensioning straps or same
Dispositif de tension de sangles ou analogues

(30) Priorität: 14.12.1996 DE 19652109
(43) Veröffentlichungstag der Anmeldung: 17.06.1998
(73) Patentinhaber: Dolezych, Susanne, 58313 Herdecke (DE)
(72) Erfinder: Dolezych, Susanne, 58313 Herdecke (DE); Schöbel, Uwe, 44319 Dortmund (DE)
(74) Vertreter: Honke, Manfred, Dr.-Ing.

(56) Entgegenhaltungen:
- DE-U- 29 615 284

## Beschreibung

Die Erfindung betrifft eine Spannvorrichtung zum Spannen von Gurten oder dergleichen, mit einem Spannrahmen und einem an dem Spannrahmen schwenkbar gelagerten Spannhebel zum Betätigen einer in dem Spannrahmen drehbar gelagerten Gurtwickelwelle sowie eines Antriebs- und Sperrmechanismus für die Gurtwickelwelle, wobei
der Spannrahmen zwei sich gegenüberliegende Rahmenschenkel aufweist und ein zwischen zwei Führungswangen gelagerter Gurtanschlussbolzen für einen Festgurt vorgesehen ist,
wobei ferner
die Rahmenschenkel mittels eines Quersteges miteinander verbunden sind, wobei weiter
die beiden Führungswangen auf der Außenseite der beiden Rahmenschenkel oder dazwischen in Schenkel- bzw. Wangenlängsrichtung beweglich geführt sind, wobei darüber hinaus
die Führungswangen oder ein beispielsweise aus dem Gurtanschlussbolzen, einem Führungsholm und den Führungswangen gebildeter Führungsrahmen mittels einer Arretierungsvorrichtung in Ausgangsstellung gehalten werden bzw. wird, und wobei
die Rahmenschenkel fluchtende Langlöcher aufweisen, welche von einem an den Führungswangen befestigten Führungsholm durchdrungen sind, und
die in Ausgangsstellung arretierten Führungswangen und die Rahmenschenkel des Spannrahmens nach Lösen der Arretierung um ein vorgegebenes Maß und ggf. bis zum Anschlag des Führungsholms gegen die der Gurtwickelwelle abgewandten Langlochenden nach Maßgabe der Gurtspannung auseinandergezogen werden oder
die Führungswangen fluchtende Langlöcher aufweisen, welche von einem an den Rahmenschenkel befestigten Führungsholm durchdrungen sind und
die Rahmenschenkel des Spannrahmens und die in Ausgangsstellung arretierten Führungswangen nach Lösen der Arretierung um ein vorgegebenes Maß mit ggf. bis zum Anschlag des Führungsholms gegen die der Gurtwickelwelle zugewandten Langlochenden nach Maßgabe der Gurtspannung auseinandergezogen werden.

Im Rahmen der Erfindung meint Festgurt den zur ortsfesten Befestigung der Spannvorrichtung dienenden Gurt, welcher also anders als der lose Gurt nicht mittels der Spannvorrichtung gespannt wird.

Eine Spannvorrichtung des eingangs beschriebenen Aufbaus ist durch die DE 296 15 284 U1 bekannt geworden. Hier steht die Problemstellung im Vordergrund, eine hinreichende Entlastung des gespannten Gurtes nicht über die Gurtwickelwelle, sondern zunächst auf einem anderen Wege in wohl definierter Weise und mit einer Anzeige für die Bedienungsperson zu realisieren. Die vorbeschriebenen Maßnahmen haben sich bewährt, sind jedoch hinsichtlich der Funktionsweise der Arretierungsvorrichtung verbesserungsfähig.

Darüber hinaus kennt man Spannvorrichtungen aus der Praxis, bei welchen der mittels der Gurtwickelwelle aufgewickelte und unter Spannung stehende Gurt unmittelbar entlastet wird, indem die Gurtwickelwelle durch Lösen des Spannmechanismus eine Freigabe erfährt. Dadurch wird auch der Gurt freigegeben und die vorhandene Spannung schlagartig reduziert. Bei dieser Methode der Entlastung verursacht die Drehbewegung der Gurtwickelwelle ein Drehmoment und somit eine Relativbewegung der Spannvorrichtung auf die jeweilige Bedienungsperson zu, die dadurch gefährdet wird. Hinzu kommt, dass der gespannte und folglich unter Belastung stehende Gurt zumindest in der Endphase des Abwickelns, wenn also die Gurtwickelwelle nur noch von wenigen Gurtwickelungen umgeben ist, zum Durchrutschen neigt, weil die Reibung zwischen dem Gurt und der Gurtwickelwelle nicht mehr groß genug ist, den gespannten Gurt zu halten. In einem solchen Fall wird die von dem Gurt unter Spannung gehaltene Last schlagartig freigegeben. Auch daraus resultiert einerseits eine Verletzungsgefahr für die Bedienungsperson, andererseits können beachtliche Schäden auftreten.

Die oben skizzierten Probleme resultieren insbesondere daraus, dass die bekannten Spannratschen keine definierte Anzeige dahingehend aufweisen, ob der Gurt sich unter Spannung befindet oder nicht. In Strenge darf ein sich unter Spannung befindender Gurt zur Vermeidung der geschilderten Verletzungs- und Beschädigungsgefahren gar nicht gelöst werden. Vielmehr ist zunächst eine hinreichende Gurtentspannung erforderlich.

Der Erfindung liegt das technische Problem zugrunde, eine gattungsgemäße Spannvorrichtung so weiter zu entwickeln, dass eine einwandfreie Funktionsweise der Arretierungsvorrichtung gewährleistet ist.

Zur Lösung dieser Aufgabe schlägt die Erfindung bei einer gattungsgemäßen Spannvorrichtung vor, dass die Arretierungsvorrichtung ein auf dem die Rahmenschenkel verbindenden Quersteg hochschwenkbar gelagertes Gesperre aufweist.

Diese Maßnahmen der Erfindung haben zunächst einmal zur Folge, dass eine hinreichende Entlastung des teilweise aufgewickelten und gespannten Gurtes nicht nur über die Gurtwickelwelle, sondern im Bereich zwischen der Gurtwickelwelle und dem Festende bzw. den Rahmenschenkeln des Spannrahmens und den Führungswangen in Wangen- bzw. Rahmenlängsrichtung erfolgt. Der beim Lösen der Arretierung auftretende Schlag oder Stoß wird zumindest teilweise über die Langlochführung für den Führungsholm zwischen den Führungswangen aufgenommen. Erst nach dem Auseinanderziehen des Spannrahmens bzw. seiner Rahmenschenkel und der Führungswangen befindet sich der aufgewickelte Gurt in spannungslosem oder nahezu spannungslosem Zustand.

Insoweit ist eine eindeutige und wohldefinierte Anzeige für die betreffende Bedienungsperson gewährleistet, weil sich der Führungsholm zwischen den Führungswangen nicht länger in seiner Ausgangsstellung, sondern eben in seiner Endstellung befindet. Nach einer bevorzugten Ausführungsform der Erfindung ist vorgesehen, dass die Rahmenschenkel an ihren der Gurtwickelwelle abgewandten Enden mittels des Quersteges miteinander verbunden sind, und dass gegen den Quersteg einerseits und gegen den Führungsholm andererseits zumindest ein Dämpfungsglied abgestützt ist, so dass der im Zuge der Entspannung auftretende Stoß oder Schlag im Wege einer kontinuierlichen bzw. stufenlosen Spannungsfreigabe sanft aufgefangen wird. Dennoch bleibt die Spannvorrichtung voll funktionstüchtig.

Weitere erfindungswesentliche Merkmale sind im Folgenden aufgeführt. So verfügen die Führungswangen über fluchtende Langlöcher, wobei der Quersteg zwischen den Rahmenschenkeln mit außenseitig über die Rahmenschenkel vorkragenden Stegenden in die Langlöcher eingreift. Insoweit wird zugleich eine einwandfreie Führung der Führungswangen auf der Außenseite der Rahmenschenkel erreicht. Dazu dienen ferner die Maßnahmen, dass der Führungsholm im Bereich der Langlöcher der Rahmenschenkel und der Quersteg bzw. seine Stegenden im Bereich der Langlöcher der Führungswangen der Breite der Langlöcher entsprechende Einschnürungen aufweisen.

Bei einer abgewandelten Ausführungsform sind vorzugsweise nach außen gekröpfte Rahmenschenkel vorgesehen, damit zwischen den Führungswangen und folglich für den Gurtanschlussbolzen eine Breite verwirklicht werden kann, welche der Gurtbreite entspricht. Die bei dieser Ausführungsform in technologischer Hinsicht erreichten Wirkungen entsprechen denen der vorbehandelten Ausführungsform. Das gilt auch für das Dämpfungsverhalten im Zuge der Spannungsfreigabe, wenn nämlich die Führungswangen an ihren der Gurtwickelwelle zugewandten Enden unter Bildung eines U-förmigen Führungsrahmens mittels eines Basissteges miteinander verbunden sind, wobei gegen den Basissteg einerseits und gegen den Führungsholm andererseits zumindest ein Dämpfungsglied abgestützt ist. Ferner empfiehlt die Erfindung bei dieser Ausführungsform, daß zur schwenkfreien Führung des Führungsrahmens der Führungsholm einen verhältnismäßig breiten Querschnitt mit abgerundeten Stirnflächen aufweist, wobei der Holmquerschnitt an die Langlochbreite und die Stirnflächen an die Langlochenden angepaßt sind.

Für beide Ausführungsformen der erfindungsgemäßen Spannvorrichtung ist vorgesehen, daß das Dämpfungsglied als eine Feder oder ein Gummielement oder ein Gummi/Metallelement ausgebildet ist. Das Dämpfungsglied kann auch als Stoßdämpfer ausgebildet sein. Nach einer bevorzugten Ausführungsform ist vorgesehen, daß das Dämpfungsglied als eine pneumatische oder hydraulische Zylinderkolbenanordnung ausgebildet ist. Das Dämpfungsglied erfüllt zugleich die Funktion eines Indikators für die Entlastung der Gurtspannung, weil sich unschwer erkennen läßt, ob der Führungsrahmen bereits in Endstellung angeschlagen hat oder sich noch in schwimmendem Zustand befindet. Weiter kann vorgesehen sein, daß die Arretierungsvorrichtung ein- oder beidseitig auf der Außenseite der Rahmenschenkel an diesen Rahmenschenkeln schwenkbar gelagerte Arretierungshebel aufweist, daß die Arretierungshebel mit einem Arretierungshaken außenseitig über die Führungswangen vorkragende Stangenenden des Führungsholms bei in Ausgangsstellung befindlichem Führungsrahmen übergreifen, und daß die Arretierungshebel eine Steuerkurve aufweisen, die mit einem Steuernocken an Hebelarmen des Spannhebels zusammenwirken. Dadurch besteht die Möglichkeit, durch Betätigung des Spannhebels die Arretierung der Führungswangen bzw. des Führungsrahmens für die Entlastung bzw. Spannungsfreigabe des gespannten Gurtes und nicht über die Gurtwickelwelle zu lösen. Wenn keine Gefahr mehr für die jeweilige Bedienungsperson besteht, also die Spannung im Gurt auf ein ausreichendes Maß reduziert worden ist, erfolgt das endgültige Entriegeln über die Freigabe der Gurtwickelwelle durch den Sperrmechanismus. Ein ungewolltes Durchrutschen des Gurtes ist ebenso nicht mehr zu befürchten wie die Gefahr von Verletzungen und Beschädigungen.

Nach einer bevorzugten Ausführungsform der Erfindung ist vorgesehen, daß das Gesperre in niedergeschwenkter Verriegelungsstellung den Führungsholm des Führungsrahmens arretiert, daß dem Gesperre ein Entriegelungsschieber zugeordnet und der Entriegelungsschieber in den Rahmenschenkeln des Spannrahmens verschiebbar gelagert ist, und daß die Hebelarme des Spannhebels Steuernocken aufweisen, welche bei Spannhebelbetätigung den Entriegelungsschieber gegen das Gesperre hochfahren und das Gesperre unter Freigabe des Führungsholms in Entriegelungsstellung hochschwenken, so daß dann der Führungsrahmen und der Spannrahmen unter hinreichender Entlastung des Spanngurtes auseinandergezogen werden. Diese Ausführungsform der Arretierungsvorrichtung ist besonders vorteilhaft, weil eine zentrale Lagerung für das Gesperre zwischen den Rahmenschenkeln des Spannrahmens verwirklicht ist. Vorzugsweise weist das Gesperre zwischen den Rahmenschenkeln gelagerte Führungsschenkel mit fluchtenden L-förmigen Langlöchern als Gleitweg für den Führungsholm auf, wobei die längeren Lochschenkel in Längsrichtung der Führungsschenkel verlaufen und die kürzeren Lochschenkel nach oben abgewinkelt sind und bei in Verriegelungsstellung befindlichem Gesperre den Führungsholm aufnehmen. Insoweit wird zugleich die Führung des Führungsrahmens stabilisiert. Dabei können die L-förmigen Langlöcher im Übergangsbereich von längeren Lochschenkeln zu den kürzeren Lochschenkeln außenbahnseitig einen vorgegebenen Gleitradius aufweisen und die längeren Lochschenkel endseitig eine den Durchmesser des Führungsholms übersteigende Aufweitung besitzen, damit einerseits Leichtgängigkeit für den entriegelten Führungsrahmen gewährleistet ist, andererseits Verspannungen zwischen dem Führungsrahmen und dem Gesperre in der auseinandergezogenen Position des Führungsrahmens vermieden werden. Weiter läßt sich die Erfindung so ausgestalten, daß die Führungsschenkel des Gesperres über die L-förmigen Langlöcher hinaus eine in Richtung auf die Gurtwickelwelle vorkragende Verlängerung aufweisen und mit diesen Verlängerungen auf dem Entriegelungsschieber aufliegen. Dadurch wird eine besonders stabile und funktionsgerechte Entriegelung des Gesperres bei Betätigung des Entriegelungsschiebers erreicht. Zweckmäßigerweise sind die Führungsschenkel des Gesperres auf ihrer Oberseite unter Bildung einesumgekehrtU-förmigen Sperrkörpers mittels einer U-Basis miteinanderverbunden, wobeidieU-Basis eine nach unten gerichtete Abwinkelung aufweist, die ein Widerlager für den Führungsholmbeiin Verriegelungsstellung befindlichem Gesperre bildet. Auf diese Weise wird eine einwandfreie Fixierung des Führungsholms und damit des Führungsrahmens in seiner Ausgangs- bzw. Verriegelungsstellung erreicht. Die Führungsschenkel des Gesperres weisen vorzugsweise an ihren dem Quersteg zugewandten Enden fluchtende Bohrungen auf und sind mit diesen Bohrungen auf dem im Querschnitt kreisförmigen Quersteg schwenkbar gelagert, z.B. unter Zwischenschaltung einer Hülse. Das Gesperre ist nach einer Ausgestaltung der Erfindung unter Federbelastung in Verriegelungsstellung niedergedrückt. Dazu kann das Gesperre unter Zwischenschaltung von Schließfedern, z.B. Schraubenfedern auf dem Quersteg schwenkbar gelagert sein. Das Gesperre ist als einteiliges Blech- bzw. Metallteil ausgebildet. - Der Entriegelungsschieber ist zweckmäßigerweise in einer gegen die Verlängerungen der Führungsschenkel des Gesperres gerichteten Schrägführung gelagert und von einer oder mehreren Druckfedern beaufschlagt bzw. ständig gegen die Verlängerungen gedrückt, so daß insoweit ein einwandfreier Kontakt sowie eine einwandfreie Entriegelung bei Betätigung des Spannhebels gewährleistet ist.

Im folgenden wird die Erfindung anhand einer lediglich ein Ausführungsbeispiel darstellenden Zeichnung näher erläutert; es zeigen
- Fig. 1: eine bekannte Spannvorrichtung in perspektivischer Darstellung und Ausgangsstellung bei gespanntem, aber nicht gezeigtem Gurt,
- Fig. 2: einen Ausschnitt aus dem Gegenstand nach Fig. 1 nach erfolgter Entspannung des aufgewickelten Gurtes,
- Fig. 3: den Gegenstand nach Fig. 1 ohne Dämpfungsglied,
- Fig. 4: eine abgewandelte Ausführungsform des Gegenstandes nach Fig. 1 mit einem anderen Dämpfungsglied,
- Fig. 5: eine weitere abgewandelte Ausführungsform des Gegenstandes nach Fig. 1 mit zwischen den Rahmenschenkeln des Spannrahmens geführten Führungswangen,

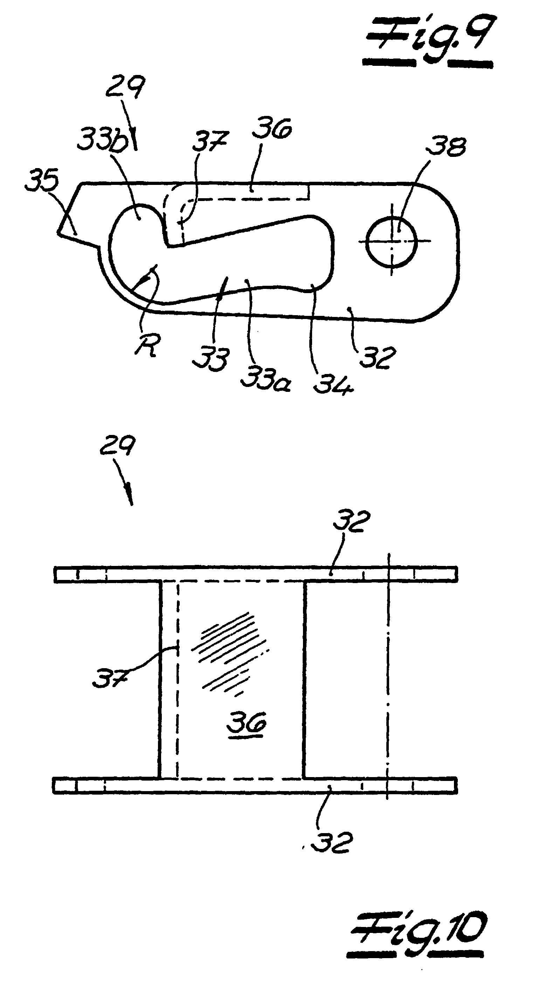

- Fig. 6: eine erfindungsgemäß abgewandelte Ausführungsform des Gegenstandes nach Fig. 1 mit einer veränderten Arretierungsvorrichtung in schematischer Seitenansicht,
- Fig. 7: den Gegenstand nach Fig. 6 bei in Entriegelungsstellung befindlichem Gesperre,
- Fig. 8: den Gegenstand nach Fig. 7 in perspektivischer Darstellung,
- Fig. 9: lediglich das Gesperre in schematischer Seitenansicht,
- Fig. 10: den Gegenstand nach Fig. 9 in Draufsicht, und
- Fig. 11: einen Ausschnitt aus dem Gegenstand nach Fig. 7 im Bereich des Entriegelungsschiebers.

In den Figuren ist eine Spannvorrichtung zum Spannen von Gurten oder dergleichen dargestellt, die in ihrem grundsätzlichen Aufbau einen Spannrahmen 1, einen an dem Spannrahmen 1 schwenkbar gelagerten Spannhebel 2 zum Betätigen einer in dem Spannrahmen drehbar gelagerten Gurtwickelwelle 3 mit einem Gurteinführungsschlitz 4 und mit zumindest einem auf der Gurtwickelwelle 3 drehfest angeordneten Klinkenrad 5 mit drehrichtungsorientierten Rastzähnen 6 aufweist. Mit den Rastzähnen 6 stehen eine in dem Spannhebel federnd gelagerte Antriebsklinke 7 als Antriebsmechanismus und eine in dem Spannrahmen 1 federnd gelagerte Sperrklinke 8 als Sperrmechanismus in Eingriff. Bei Betätigung des Spannhebels 2 in Zug-Schwenkrichtung rastet die Antriebsklinke 7 hinter die Rastzähne 6 ein und nimmt das Klinkenrad 5 bzw. die Gurtwickelwelle 3 mit. Bei Betätigung des Spannhebels 2 in Druck-Schwenkrichtung überfährt die Antriebsklinke 7 die Rastzähne 6 bei feststehendem Klinkenrad 5. Bei Weiterschwenken des Spannhebels 2 in Druck-Schwenkrichtung und Zurückziehen der Antriebsklinke 7 drückt eine Steuerkurve 9 an dem Spannhebel 2 die Sperrklinke 8 in eine das Klinkenrad 5 freigebende Position zurück.

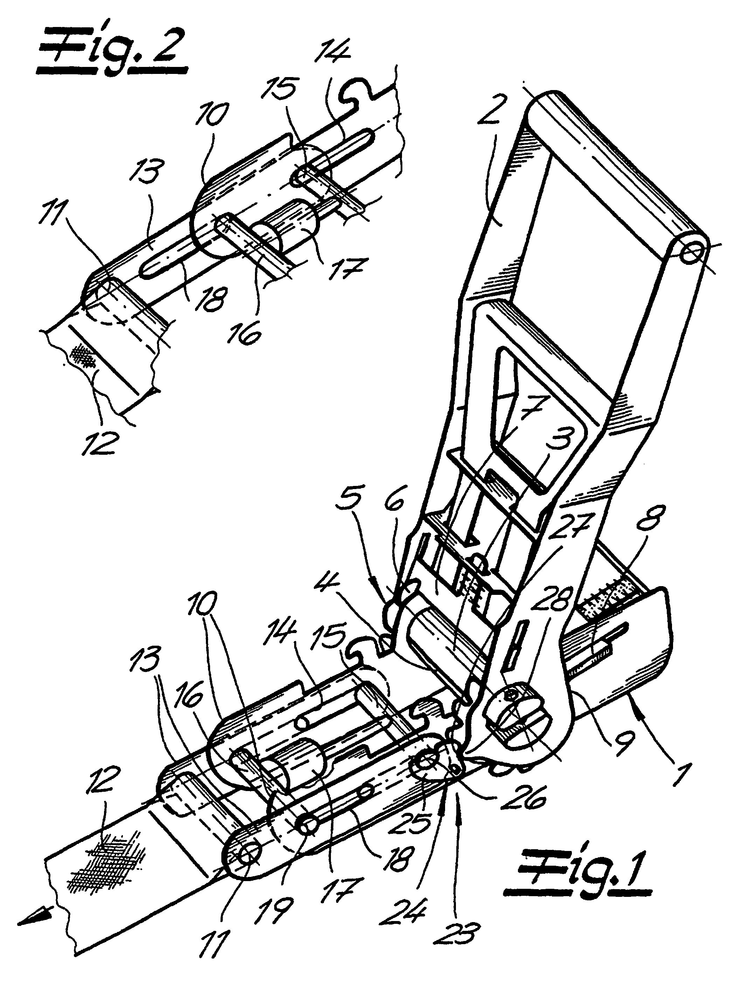

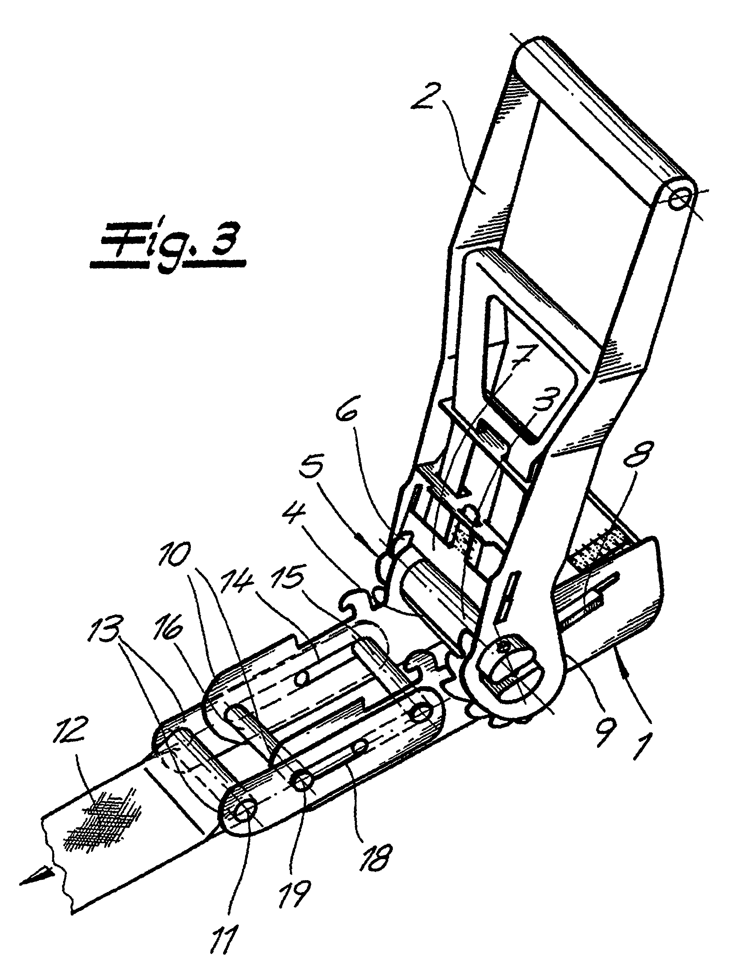

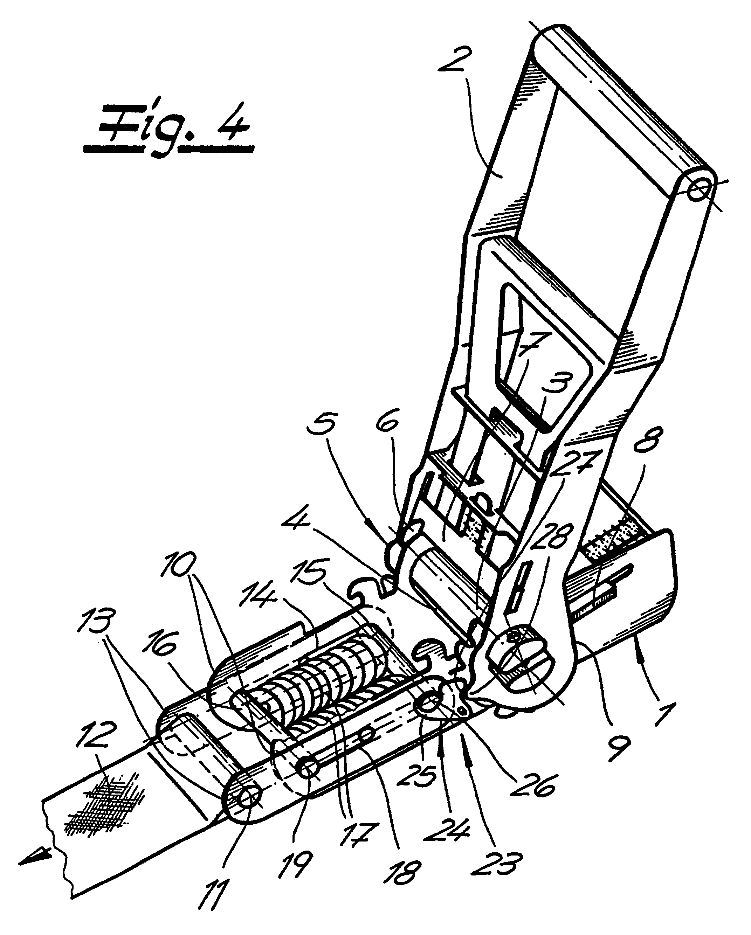

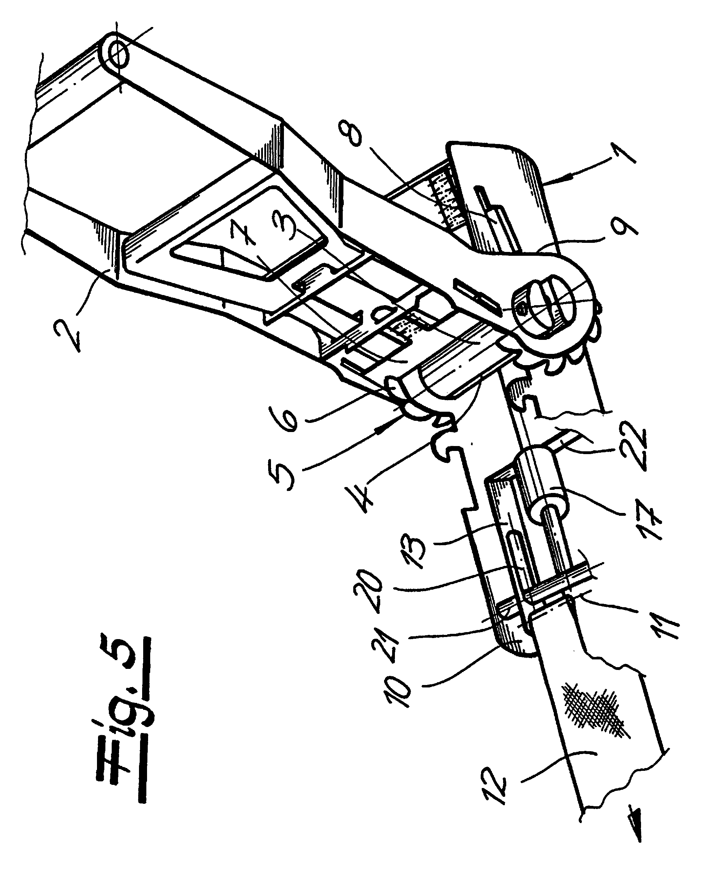

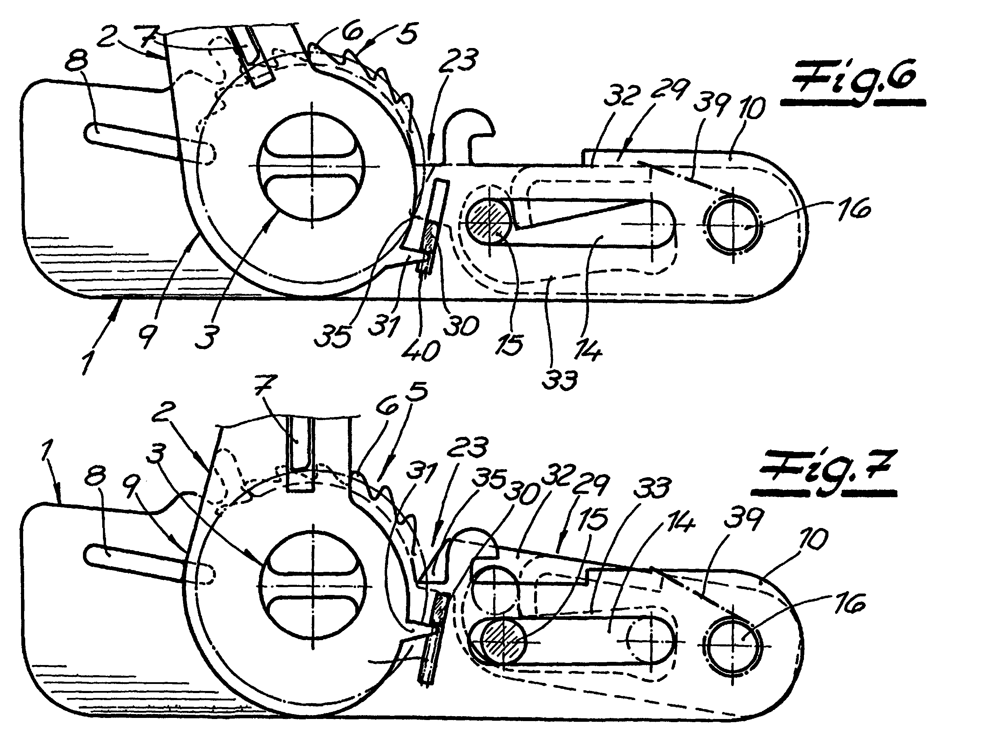

Der Spannrahmen 1 weist zwei sich gegenüberliegende Rahmenschenkel 10 auf. Ferner ist ein Gurtanschlußbolzen 11 für einen Festgurt 12 vorgesehen. Bei der Ausführungsform nach den Fig. 1 bis 4 ist der Gurtanschlußbolzen 11 zwischen zwei Führungswangen 13 gelagert. Die beiden Führungswangen 13 sind auf der Außenseite der beiden Rahmenschenkel 10 in Schenkel-bzw. Wangenlängsrichtung beweglich geführt. Die Rahmenschenkel 10 weisen fluchtende Langlöcher 14 auf. Die Langlöcher 14 sind von einem an den Führungswangen 13 befestigten Führungsholm 15 durchdrungen. Die in Ausgangsstellung arretierten Führungswangen 13 und die Rahmenschenkel 10 des Spannrahmens 1 werden nach Lösen der Arretierung um ein vorgegebenes Maß und gegebenenfalls bis zum Anschlag des Führungsholms 15 gegen die der Gurtwickelwelle 3 abgewandten Langlochenden im Wege des Entspannens des (teilweise) aufgewickelten Gurtes auseinandergezogen. Die Rahmenschenkel 10 sind an ihren der Gurtwickelwelle 13 abgewandten Enden mittels eines Quersteges 16 miteinander verbunden. Gegen den Quersteg 16 einerseits und gegen den Führungsholm 15 andererseits ist zumindest ein Dämpfungsglied 17 abgestützt. Die Führungswangen 13 weisen fluchtende Langlöcher 18 auf. Der Quersteg 16 greift mit außenseitig über die Rahmenschenkel 10 vorkragenden Stegenden 19 in die Langlöcher 18 ein. Der Führungsholm 15 weist im Bereich der Langlöcher 14 der Rahmenschenkel 10 und der Quersteg 16 bzw. seine Stegenden 19 weisen im Bereich der Langlöcher 18 der Führungswangen 13 der Breite der Langlöcher 14, 18 entsprechende Einschnürungen auf, die nicht gezeigt sind.

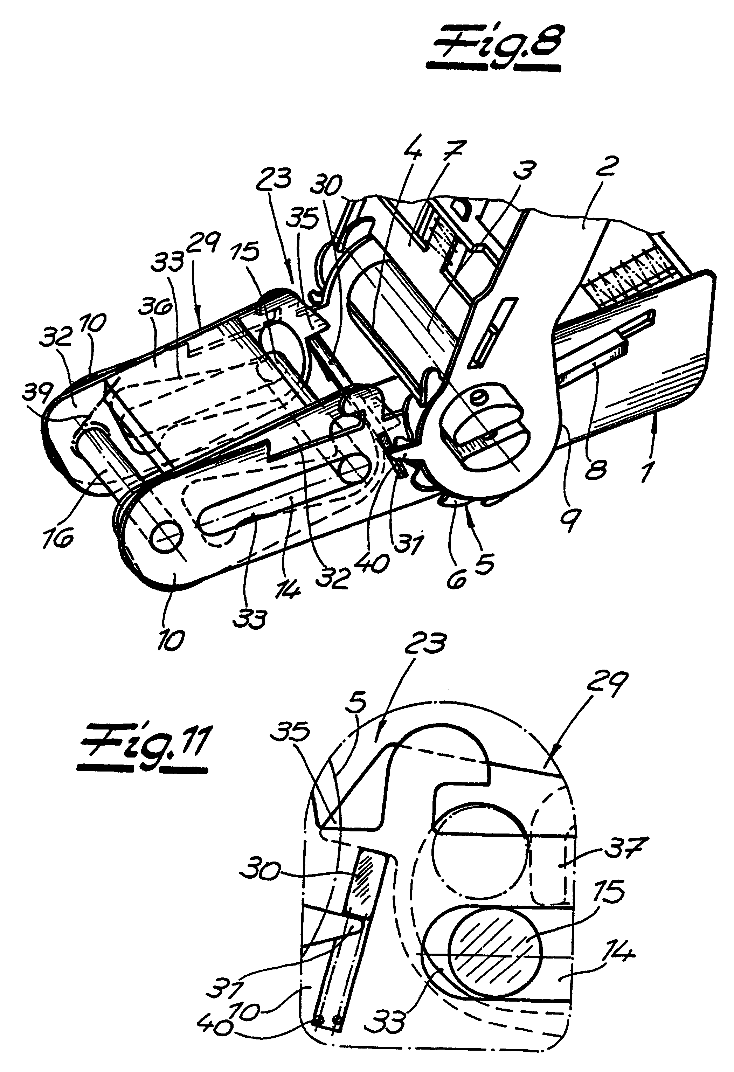

Bei der in Fig. 5 dargestellten Ausführungsform ist der Gurtanschlußbolzen 11 zwischen zwei inneren Führungswangen 13 gelagert. Die beiden Führungswangen 13 sind zwischen den beiden Rahmenschenkeln 10 in Schenkel- bzw. Wangenlängsrichtung beweglich geführt. Ferner weisen die Führungswangen 13 fluchtende Langlöcher 20 auf. Die Langlöcher 20 sind von einem an den Rahmenschenkeln 10 befestigten Führungsholm 21 durchdrungen. Die Rahmenschenkel 10 des Spannrahmens 1 und die in Ausgangsstellung arretierten Führungswangen 13 werden nach Lösen der Arretierung um ein vorgegebenes Maß und gegebenenfalls bis zum Anschlag des Führungsholms 21 gegen die der Gurtwickelwelle 3 zugewandten Langlochenden nach Maßgabe der Gurtspannung auseinandergezogen. Die Führungswangen 13 sind an ihren der Gurtwickelwelle 3 zugewandten Enden unter Bildung eines U-förmigen Führungsrahmens mittels eines Basissteges 22 miteinander verbunden. Gegen den Basissteg 22 einerseits und gegen den Führungsholm 21 andererseits ist wiederum zumindest ein Dämpfungsglied 17 abgestützt. Zur schwenkfreien Führung des Führungsrahmens 13, 22 weist der Führungsholm 21 einen verhältnismäßig breiten Querschnitt mit abgerundeten Stirnflächen auf, wobei der Holmquerschnitt an die Langlochbreite und die Stirnflächen an die Langlochenden angepaßt sind, also entsprechend abgerundet sind.

Bei beiden Ausführungsformen kann das Dämpfungsglied 17 als Feder oder Gummipuffer oder Gummi/Metallelement ausgebildet sein. Bevorzugt handelt es sich bei dem Dämpfungsglied jedoch um eine hydraulische Zylinderkolbenanordnung 17 oder um einen Stoßdämpfer. - Die Führungswangen 13 oder der Führungsrahmen, z.B. der aus dem Gurtanschlußbolzen 11, Führungsholm 15 und den Führungswangen 13 gebildete Führungsrahmen sind mittels einer Arretierungsvorrichtung 23 in Ausgangsstellung gehalten. Die Arretierungsvorrichtung 23 weist ein- oder beidseitig auf der Außenseite der Rahmenschenkel 10 schwenkbar gelagerte Arretierungshebel 24 auf. Die Arretierungshebel 24 übergreifen oder untergreifen mit einem Arretierungshaken 25 außenseitig über die Führungswangen 13 vorkragende Stangenenden 26 des Führungsholms 15 bei in Ausgangsstellung befindlichen Führungsrahmen. Die Arretierungshebel 24 weisen eine Steuerkurve 27 auf, die mit einem Steuernocken 28 an Hebelarmen des Spannhebels 2 zusammenwirken, so daß das Lösen der Arretierungsvorrichtung 23 im Wege der Betätigung des Spannhebels 2 erfolgen kann.

Nach einer abgewandelten Ausführungsform weist diese Arretierungsvorrichtung 23 ein auf dem die Rahmenschenkel 10 verbindenden Quersteg 16 hochschwenkbar gelagertes Gesperre 29 für den Führungsrahmen 11, 13, 15 auf. Das Gesperre 29 arretiert in niedergeschwenkter Verriegelungsstellung den Führungsholm 15 des Führungsrahmens. Dem Gesperre 29 ist ein Entriegelungsschieber 30 zugeordnet. Der Entriegelungsschieber 30 ist in den Rahmenschenkeln 10 des Spannrahmens 1 verschiebbar gelagert. Die Hebelarme des Spannhebels 2 weisen wickelwellenseitig Steuernocken 31 auf, welche bei Spannhebelbetätigung und insbesondere in der Anfangsphase der Spannhebelbetätigung den Entriegelungsschieber 30 gegen das Gesperre 29 hochfahren und das Gesperre 29 unter Freigabe des Führungsholms 15 in Entriegelungsstellung hochwenken. Folglich können sich dann der Spannrahmen 1 und der Führungsrahmen 11, 13, 15 bis zu einer hinreichenden Entlastung der Gurtspannung auseinanderziehen. Das Gesperre 29 weist zwischen den Rahmenschenkeln 10 gelagerte Führungsschenkel 32 mit fluchtenden L-förmigen Langlöchern 33 als Gleitweg für den Führungsholm 15 auf, wobei die längeren Lochschenkel 33a in Längsrichtung der Führungsschenkel 32 verlaufen und die kürzeren Lochschenkel 33b nach oben abgewinkelt sind und bei in Verriegelungsstellung befindlichem Gesperre 29 den Führungsholm 15 aufnehmen. Die L-förmigen Langlöcher 33 weisen im Übergangsbereich von den längeren Lochschenkeln 33a zu den kürzeren Lochschenkeln 33b außenbahnseitig einen vorgegebenen Gleitradius R auf. Die längeren Lochschenkel 33a besitzen endseitig eine den Durchmesser des Führungsholms 15 übersteigende Aufweitung 34. Die Führungsschenkel 32 des Gesperres 29 besitzen über die L-förmigen Langlöcher 33 hinaus eine in Richtung auf die Gurtwickelwelle 3 vorkragende Verlängerung 35 und liegen mit diesen Verlängerungen 35 auf dem Entriegelungsschieber 30 auf. Die Führungsschenkel 32 sind auf ihrer Oberseite unter Bildung eines umgekehrten U-förmigen Sperrkörpers mittels einer U-Basis 36 miteinander verbunden. Die U-Basis 36 weist eine nach unten gerichtete Abwinkelung 37 auf, die ein Widerlager für den Führungsholm 15 bei in Verriegelungsstellung befindlichem Gesperre 29 bildet. Die Führungsschenkel 32 weisen an ihren dem Quersteg 16 zugewandten Enden fluchtende Bohrungen 38 auf und sind mit diesen Bohrungen auf dem im Querschnitt kreisförmigen Quersteg 16 schwenkbar gelagert, z.B. unter Zwischenschaltung einer nicht gezeigten Lagerhülse. Das Gesperre 29 ist unter Federbelastung in Verriegelungsstellung gedrückt. Dazu ist das Gesperre 29 unter Zwischenschaltung von zumindest einer Schließfeder 39, z.B. Schraubenfeder auf dem Quersteg 16 schwenkbar gelagert. Das ist lediglich angedeutet. - Das Gesperre 29 ist in fertigungstechnisch vorteilhafter Weise als einteiliges Metallteil ausgebildet. - Der Entriegelungsschieber 30 ist in einer gegen die Verlängerungen 35 der Führungsschenkel 32 des Gesperres 29 gerichteten Schrägführung gelagert und von zumindest einer lediglich angedeuteten Druckfeder 40 beaufschlagt, welche den Entriegelungsschieber 30 gegen die Verlängerungen 35 drückt.

## Patentansprüche

1. Spannvorrichtung zum Spannen von Gurten oder dergleichen, mit einem Spannrahmen (1) und einem an dem Spannrahmen (1) schwenkbar gelagerten Spannhebel (2) zum Betätigen einer in dem Spannrahmen (1) drehbar gelagerten Gurtwickelwelle (3) sowie eines Antriebs- und Sperrmechanismus (5, 6, 7, 8) für die Gurtwickelwelle (3), wobei darüber hinaus die folgenden Merkmale verwirklicht sind:
a) der Spannrahmen (1) weist zwei sich gegenüberliegende Rahmenschenkel (10) auf;
b) es ist ein zwischen zwei Führungswangen (13) gelagerter Gurtanschlussbolzen (11) für einen Festgurt (12) vorgesehen;
c) die Rahmenschenkel (10) sind mittels eines Quersteges (16) miteinander verbunden;
d) die beiden Führungswangen (13) sind auf der Außenseite der beiden Rahmenschenkel (10) oder dazwischen in Schenkel- bzw. Wangenlängsrichtung beweglich geführt;
e) die Führungswangen (13) oder ein beispielsweise aus dem Gurtanschlussbolzen (11), einem Führungsholm (15) und den Führungswangen (13) gebildeter Führungsrahmen (11, 13, 15) werden bzw. wird mittels einer Arretierungsvorrichtung (23) in Ausgangsstellung gehalten;
f1) die Rahmenschenkel (10) weisen fluchtende Langlöcher (14) auf, welche von einem an den Führungswangen (13) befestigten Führungsholm (15) durchdrungen sind, und
g1) die in Ausgangsstellung arretierten Führungswangen (13) und die Rahmenschenkel (10) des Spannrahmens (1) werden nach Lösen der Arretierung um ein vorgegebenes Maß und ggf. bis zum Anschlag des Führungsholmes (15) gegen die der Gurtwickelwelle (3) abgewandten Langlochenden nach Maßgabe der Gurtspannung auseinandergezogen,
oder
f2) die Führungswangen (13) weisen fluchtende Langlöcher (20) auf, die von einem an den Rahmenschenkeln (10) befestigten Führungsholm (21) durchdrungen sind, und
g2) die Rahmenschenkel (10) des Spannrahmens (1) sowie die in Ausgangsstellung arretierten Führungswangen (13) werden nach Lösen der Arretierung um ein vorgegebenes Maß mit ggf. bis zum Anschlag des Führungsholms (21) gegen die der Gurtwickelwelle (3) zugewandten Langlochenden nach Maßgabe der Gurtspannung auseinandergezogen,
**dadurch gekennzeichnet, dass**
die Arretierungsvorrichtung (23) ein auf dem die Rahmenschenkel (10) verbindenden Quersteg (16) hochschwenkbar gelagertes Gesperre (29) aufweist.

2. Spannvorrichtung nach Anspruch 1, **dadurch gekennzeichnet, dass** die Rahmenschenkel (10) an ihren der Gurtwickelwelle (3) abgewandten Enden mittels des Quersteges (16) miteinander verbunden sind, und dass gegen den Quersteg (16) einerseits und gegen den Führungsholm (15) andererseits zumindest ein Dämpfungsglied (17) abgestützt ist.

3. Spannvorrichtung nach Anspruch 1 oder 2, **dadurch gekennzeichnet, dass** die Führungswangen (13) fluchtende Langlöcher (18) aufweisen, und dass der Quersteg (16) mit außenseitig über die Rahmenschenkel (10) vorkragenden Stegenden (19) in die Langlöcher (18) eingreift.

4. Spannvorrichtung nach einem der Ansprüche 1 bis 3, **dadurch gekennzeichnet, dass** der Führungsholm (15) im Bereich der Langlöcher (14) der Rahmenschenkel (10) und der Quersteg (16) bzw. seine Stegenden (19) im Bereich der Langlöcher (18) der Führungswangen (13) der Breite der Langlöcher (14, 18) entsprechende Einschnürungen aufweisen.

5. Spannvorrichtung nach einem der Ansprüche 1 bis 4, **dadurch gekennzeichnet, dass** die Führungswangen (13) an ihren der Gurtwickelwelle (3) zugewandten Enden unter Bildung eines U-förmigen Führungsrahmens mittels eines Basissteges (22) miteinander verbunden sind, und dass gegen den Basissteg (22) einerseits und gegen den Führungsholm (21) andererseits zumindest ein Dämpfungsglied (17) abgestützt ist.

6. Spannvorrichtung nach einem der Ansprüche 1 bis 5, **dadurch gekennzeichnet, dass** zur schwenkfreien Führung des Führungsrahmens (13, 22) der Führungsholm (21) einen breiten Querschnitt mit abgerundeten Stirnflächen aufweist, wobei der Holmquerschnitt an die Langlochbreite und die Stirnflächen an die Langlochenden angepasst sind.

7. Spannvorrichtung nach einem der Ansprüche 1 bis 6, **dadurch gekennzeichnet, dass** das Dämpfungsglied (17) als eine Feder oder ein Gummipuffer oder ein Gummi/Metallelement ausgebildet ist.

8. Spannvorrichtung nach einem der Ansprüche 1 bis 6, **dadurch gekennzeichnet, dass** das Dämpfungsglied (17) als eine pneumatische oder hydraulische Zylinderkolbenanordnung ausgebildet ist.

9. Spannvorrichtung nach einem der Ansprüche 1 bis 6, **dadurch gekennzeichnet, dass** das Dämpfungsglied (17) als ein Stoßdämpfer ausgebildet ist.

10. Spannvorrichtung nach einem der Ansprüche 1 bis 9, **dadurch gekennzeichnet, dass** das Gesperre (29) in niedergeschwenkter Verriegelungsstellung den Führungsholm (15) des Führungsrahmens (11, 13, 15) arretiert, und dass dem Gesperre (29) ein Entriegelungsschieber (30) zugeordnet und der Entriegelungsschieber (30) in den Rahmenschenkeln (10) des Spannrahmens (1) verschiebbar gelagert ist.

11. Spannvorrichtung nach einem der Ansprüche 1 bis 10, **dadurch gekennzeichnet, dass** die Hebelarme des Spannhebels (2) Steuernocken (31) aufweisen, welche bei Spannhebelbetätigung den Entriegelungsschieber (30) gegen das Gesperre (29) hochfahren und das Gesperre (29) unter Freigabe des Führungsholms (15) in Entriegelungsstellung hochschwenken.

12. Spannvorrichtung nach einem der Ansprüche 1 bis 11, **dadurch gekennzeichnet, dass** das Gesperre (29) zwischen den Rahmenschenkeln (10) gelagerte Führungsschenkel (32) mit fluchtenden L-förmigen Langlöchern (33) als Gleitweg für den Führungsholm (15) aufweist, wobei die längeren Lochschenkel (33a) in Längsrichtung der Führungsschenkel (32) verlaufen und die kürzeren Lochschenkel (33b) abgewinkelt sind und bei in Verriegelungsstellung befindlichem Gesperre (29) den Führungsholm (15) aufnehmen.

13. Spannvorrichtung nach einem der Ansprüche 1 bis 12, **dadurch gekennzeichnet, dass** die L-förmigen Langlöcher (33) im Übergangsbereich von den längeren Lochschenkeln (33a) zu den kürzeren Lochschenkeln (33b) einen vorgegebenen Gleitradius aufweisen und die längeren Lochschenkel (33a) endseitig eine den Durchmesser des Führungsholms (15) übersteigende Aufweitung (34) besitzen.

14. Spannvorrichtung nach einem der Ansprüche 1 bis 13, **dadurch gekennzeichnet, dass** die Führungsschenkel (32) des Gesperres (29) über die L-förmigen Langlöcher (33) hinaus eine in Richtung auf die Gurtwickelwelle (3) vorkragende Verlängerung (35) aufweisen und mit diesen Verlängerungen (35) auf dem Entriegelungsschieber (30) aufliegen.

15. Spannvorrichtung nach einem der Ansprüche 1 bis 14, **dadurch gekennzeichnet, dass** die Führungsschenkel (32) auf ihrer Oberseite unter Bildung eines umgekehrt U-förmigen Sperrkörpers mittels einer U-Basis (36) miteinander verbunden sind und die U-Basis (36) eine Abwinklung (37) aufweist, die ein Widerlager für den Führungsholm (15) bei in Verriegelungsstellung befindlichem Gesperre (29) bildet.

16. Spannvorrichtung nach einem der Ansprüche 1 bis 15, **dadurch gekennzeichnet, dass** die Führungsschenkel (32) an ihren dem Quersteg (16) zugewandten Enden fluchtende Bohrungen (38) aufweisen und mit diesen Bohrungen (38) auf dem im Querschnitt kreisförmigen Quersteg (16) schwenkbar gelagert sind, z.B. unter Zwischenschaltung einer Lagerhülse.

17. Spannvorrichtung nach einem der Ansprüche 1 bis 16, **dadurch gekennzeichnet, dass** das Gesperre (29) unter Federbelastung in Verriegelungsstellung gedrückt ist.

18. Spannvorrichtung nach einem der Ansprüche 1 bis 17, **dadurch gekennzeichnet, dass** das Gesperre (29) unter Zwischenschaltung von zumindest einer Schließfeder (39), z.B. Schraubenfeder auf dem Quersteg, schwenkbar gelagert ist.

19. Spannvorrichtung nach einem der Ansprüche 1 bis 18, **dadurch gekennzeichnet, dass** das Gesperre (29) als einteiliges Metallteil ausgebildet ist.

20. Spannvorrichtung nach einem der Ansprüche 1 bis 19, **dadurch gekennzeichnet, dass** der Entriegelungsschieber (30) in einer gegen die Verlängerungen (35) der Führungsschenkel (32) gerichteten Schrägführung gelagert und von einer oder mehreren Druckfedern (40) beaufschlagt bzw. gegen die Verlängerungen (35) gedrückt ist.

## Claims

1. A clamping device for the clamping of belts or suchlike, with a clamping frame (1) and a clamping lever (2) mounted in a swivelling manner on the clamping frame (1) for operating a belt winding shaft (3) mounted in a rotating manner in the clamping frame (1) as well as a driving and locking mechanism (5, 6, 7, 8) for the belt winding shaft (3), whereby the following features are additionally provided:
a) the clamping frame (1) has two frame legs (10) lying opposite one another;
b) a belt connecting bolt (11) mounted between two guide cheeks (13) is provided for a fixed belt (12);
c) the frame legs (10) are connected together by means of a crossbar (16) ;
d) the two guide cheeks (13) are located on the outside of the two frame legs (10) or between the latter such as to be mobile in the longitudinal direction of the legs or cheeks;
e) the guide cheeks (13) or a guide frame (11, 13, 15) formed for example by the belt connecting bolt (11), a guide bar (15) and the guide cheeks (13) are/is held in the starting position by means of a locking device (23) ;
f1) the frame legs (10) have aligned slotted holes (14), which are penetrated by a guide bar (15) fixed to the guide cheeks (13), and
g1) the guide cheeks (13) locked in the starting position and the frame legs (10) of the clamping frame (1) are drawn apart after release of the locking device by a preset amount and, if necessary, until the guide bar (15) strikes against the ends of the slotted holes facing away from the belt winding shaft (3), according to the belt tension,
or
f2) the guide cheeks (13) have aligned slotted holes (20), which are penetrated by a guide bar (21) fixed to the frame legs (10), and
g1) the frame legs (10) of the clamping frame (1) and the guide cheeks (13) locked in the starting position are drawn apart after release of the locking device by a preset amount and, if necessary, until the guide bar (21) strikes against the ends of the slotted holes facing towards the belt winding shaft (3), according to the belt tension,
**characterized in that**
the locking device (23) has a locking mechanism (29) which is mounted on the crossbar (16) connecting the frame legs (10) such that it can be swivelled upwards.

2. The clamping device according to claim 1, **characterized in that** the frame legs (10) are connected together by means of the crossbar (16) at their ends facing away from the belt winding shaft (3), and that at least one damping element (17) is supported against the crossbar (16) on the one hand and against the guide bar (15) on the other hand.

3. The clamping device according to claim 1 or 2, **characterized in that** the guide cheeks (13) have aligned slotted holes (18), and that the crossbar (16) engages in the slotted holes (18) with bar ends (19) projecting on the outside beyond the frame legs (10).

4. The clamping device according to any one of claims 1 to 3, **characterized in that** the guide bar (15) in the area of the slotted holes (14) of the frame legs (10) and the crossbar (16) or its bar ends (19) in the area of the slotted holes (18) of the guide cheeks (13) have narrowed sections corresponding to the width of the slotted holes (14, 18).

5. The clamping device according to any one of claims 1 to 4, **characterized in that** the guide cheeks (13) are connected together by means of a base web (22) at their ends facing towards the belt winding shaft (3) thereby forming a U-shaped guide frame, and that at least one damping element (17) is supported against the base web (22) on the one hand and against the guide bar (21) on the other hand.

6. The clamping device according to any one of claims 1 to 5, **characterized in that**, for the purpose of the slew-free guidance of the guide frame (13, 22), the guide bar (21) has a wide cross-section with rounded end faces, whereby the bar cross-section is adapted to the width of the slotted holes and the end faces to the ends of the slotted holes.

7. The clamping device according to any one of claims 1 to 6, **characterized in that** the damping element (17) is designed as a spring or a rubber buffer or a rubber/metal element.

8. The clamping device according to any one of claims 1 to 6, **characterized in that** the damping element (17) is designed as a pneumatic or hydraulic cylinder-piston arrangement.

9. The clamping device according to any one of claims 1 to 6, **characterized in that** the damping element (17) is designed as a shock absorber.

10. The clamping device according to any one of claims 1 to 9, **characterized in that** the locking mechanism (29) in the swivelled-down locking position locks in place the guide bar (15) of the guide frame (11, 13, 15), and that an unlocking slider (30) is assigned to the locking mechanism (29) and the unlocking slider (30) is mounted in a displaceable manner in the frame legs (10) of the clamping frame (1).

11. The clamping device according to any one of claims 1 to 10, **characterized in that** the lever arms of the clamping lever (2) have radial cams (31) which, when the clamping lever is operated, drive the unlocking slider (30) up against the locking mechanism (29) and swivel the locking mechanism (29) up into the unlocking position thereby releasing the guide bar (15).

12. The clamping device according to any one of claims 1 to 11, **characterized in that** the locking mechanism (29) has guide legs (32) located between the frame legs (10), with aligned L-shaped slotted holes (33) as a slide path for the guide bar (15), whereby the longer legs (33a) of the holes run in the longitudinal direction of the guide legs (32) and the shorter legs (33b) of the holes lead off at an angle and accommodate the guide bar (15) when the locking mechanism (29) is in the locking position.

13. The clamping device according to any one of claims 1 to 12, **characterized in that** the L-shaped slotted holes (33) have a prescribed sliding radius in the transition zone from the longer legs (33a) of the holes to the shorter legs (33b) of the holes and the longer legs (33a) of the holes have on the end side a bulge (34) which exceeds the diameter of the guide bar (15) .

14. The clamping device according to any one of claims 1 to 13, **characterized in that** the guide legs (32) of the locking mechanism (29) have an extension (35) projecting in the direction of the belt winding shaft (3) beyond the L-shaped slotted holes (33) and lie with these extensions (35) on the unlocking slider (30).

15. The clamping device according to any one of claims 1 to 14, **characterized in that** the guide legs (32) are joined together by means of a U-base (36) on their upper side thereby forming an inverted U-shaped locking body and the U-base (36) has a bent section (37) which forms an abutment for the guide bar (15) when the locking mechanism (29) is in the locking position.

16. The clamping device according to any one of claims 1 to 15, **characterized in that** the guide legs (32) have aligned drill-holes (38) at their ends facing towards the crossbar (16) and are mounted with these drill-holes (38) in a swivelling manner on the crossbar (16) circular in cross-section, e.g. with the interposition of a bearing sleeve.

17. The clamping device according to any one of claims 1 to 16, **characterized in that** the locking mechanism (29) is pressed into the locking position under spring loading.

18. The clamping device according to any one of claims 1 to 17, **characterized in that** the locking mechanism (29) is mounted in a swivelling manner with the interposition of at least one locking spring (39), e.g. helical spring on the crossbar.

19. The clamping device according to any one of claims 1 to 18, **characterized in that** the locking mechanism (29) is designed as a one-piece metal part.

20. The clamping device according to any one of claims 1 to 19, **characterized in that** the unlocking slider (30) is mounted in an inclined guide directed towards the extensions (35) of the guide legs (32) and is acted upon by one or more compression springs (40), i.e. pressed against the extensions (35).

## Revendications

1. Dispositif de serrage pour tendre des sangles ou similaires, avec un cadre de serrage (1) et un levier de serrage (2) installé de manière à pouvoir pivoter sur le cadre de serrage (1) pour l'actionnement d'un arbre d'enroulement de sangle (3) installé en rotation dans le cadre de serrage (1) ainsi que d'un mécanisme d'entraînement et de blocage (5, 6, 7, 8) pour l'arbre d'enroulement de sangle (3), les caractéristiques suivantes étant de plus réalisées :
a) le cadre de serrage (1) présente deux branches de cadre (10) se faisant face ;
b) il est prévu un goujon de raccordement de sangle (11) placé entre deux flasques de guidage (13) pour une sangle fixe (12) ;
c) les branches du cadre (10) sont reliées l'une à l'autre au moyen d'une traverse (16) ;
d) les deux flasques de guidage (13) sont guidées de manière mobile sur la face extérieure des deux branches de cadre (10) ou entre elles dans le sens longitudinal des branches ou des flasques ;
e) les flasques de guidage (13) ou un cadre de guidage (11, 13, 15) constitué par exemple du goujon de raccordement de sangle (11), d'un montant de guidage (15) et des flasques de guidage (13) sont maintenues ou est maintenu au moyen d'un dispositif d'arrêt (23) en position initiale ;
f1) les branches du cadre (10) présentent des trous allongés alignés (14), qui sont traversés par un montant de guidage (15) fixé sur les flasques de guidage (13), et
g1) les flasques de guidage (13) arrêtées en position initiale et les branches du cadre (10) du cadre de serrage (1) sont écartées l'une de l'autre après relâchement de l'arrêt dans une mesure prédéfinie et éventuellement jusqu'à la butée du montant de guidage (15) contre les extrémités des trous allongés détournées de l'arbre d'enroulement de sangle (3) en fonction de la tension de la sangle,
ou
f2) les flasques de guidage (13) présentent des trous allongés alignés (20) qui sont traversés par un montant de guidage (21) fixé sur les branches du cadre (10), et
g2) les branches (10) du cadre de serrage (1) ainsi que les flasques de guidage (13) arrêtées en position initiale sont écartées l'une de l'autre après relâchement de l'arrêt dans une mesure prédéfinie et éventuellement jusqu'à la butée du montant de guidage (21) contre les extrémités des trous allongés tournées vers l'arbre d'enroulement de sangle (3) en fonction de la tension de la sangle,
**caractérisé en ce que**
le dispositif d'arrêt (23) présente un fermoir (29) installé de manière à pouvoir pivoter en hauteur sur la traverse (16) reliant les branches du cadre (10).

2. Dispositif de serrage selon 1a revendication 1, **caractérisé en ce que** les branches du cadre (10) sont reliées l'une à l'autre à leurs extrémités détournées de l'arbre d'enroulement de sangle (3) au moyen de la traverse (16) et que, contre la traverse (16) d'une part et contre le montant de guidage (15) d'autre part, au moins un élément d'amortissement (17) s'appuie.

3. Dispositif de serrage selon la revendication 1 ou 2, **caractérisé en ce que** les flasques de guidage (13) présentent des trous allongés alignés (18) et que la traverse (16) s'engrène, par ses extrémités (19) débordant du côté extérieur des branches du cadre (10), dans les trous allongés (18).

4. Dispositif de serrage selon une des revendications 1 à 3, **caractérisé en ce que** le montant de guidage (15), dans la zone des trous allongés (14) des branches du cadre (10), et la traverse (16) ou ses extrémités (19) présentent, dans la zone des trous allongés (18) des flasques de guidage (13), des étranglements équivalant à la largeur des trous allongés (14, 18).

5. Dispositif de serrage selon une des revendications 1 à 4, **caractérisé en ce que** les flasques de guidage (13) sont reliées l'une à l'autre à leurs extrémités tournées vers l'arbre d'enroulement de sangle (3), en formant un cadre de guidage en forme de U, au moyen d'une traverse de base (22), et que, contre la traverse de base (22) d'une part et contre le montant de guidage (21) d'autre part, au moins un élément d'amortissement (17) s'appuie.

6. Dispositif de serrage selon une des revendications 1 à 5, **caractérisé en ce que**, pour le guidage sans pivotement du cadre de guidage (13, 22), le montant de guidage (21) présente une large section transversale avec des surfaces frontales arrondies, la section transversale du montant étant adaptée à la largeur des trous allongés et les surfaces frontales étant adaptées aux extrémités des trous allongés.

7. Dispositif de serrage selon une des revendications 1 à 6, **caractérisé en ce que** l'élément d'amortissement (17) est conçu sous forme d'un ressort ou d'un tampon en caoutchouc ou d'un élément en caoutchouc/métal.

8. Dispositif de serrage selon une des revendications 1 à 6, **caractérisé en ce que** l'élément d'amortissement (17) est conçu sous forme d'un agencement de pistons de vérins pneumatique ou hydraulique.

9. Dispositif de serrage selon une des revendications 1 à 6, **caractérisé en ce que** l'élément d'amortissement (17) est conçu sous forme d'un amortisseur de choc.

10. Dispositif de serrage selon une des revendications 1 à 9, **caractérisé en ce que** le fermoir (29) arrête, en position de verrouillage pivotée vers le bas, le montant de guidage (15) du cadre de guidage (11, 13, 15) et qu'est associé au fermoir (29) une tirette de déverrouillage (30) et que la tirette de déverrouillage (30) est installée de manière mobile dans les branches (10) du cadre de serrage (1).

11. Dispositif de serrage selon une des revendications 1 à 10, **caractérisé en ce que** les bras de levier du levier de serrage (2) présentent des cames de commande (31) qui, lors de l'actionnement du levier de serrage, montent la tirette de déverrouillage (30) contre le fermoir (29) et pivotent vers le haut en position de déverrouillage le fermoir (29) en relâchant le montant de guidage (15) .

12. Dispositif de serrage selon une des revendications 1 à 11, **caractérisé en ce que** le fermoir (29) présente des branches de guidage (32) disposées entre les branches du cadre (10) avec des trous allongés (33) alignés en forme de L comme voie de glissement pour le montant de guidage (15), les branches perforées (33a) les plus longues s'étendant dans le sens longitudinal des branches de guidage (32) et les branches perforées plus courtes (33b) étant en angle et recevant le montant de guidage (15) lorsque le fermoir (29) se trouve en position de verrouillage.

13. Dispositif de serrage selon une des revendications 1 à 12, **caractérisé en ce que** les trous allongés en forme de L (33) présentent, dans la zone de transition des branches perforées les plus longues (33a) aux branches perforées plus courtes (33b), un rayon de glissement prédéfini et que les branches perforées les plus longues (33a) possèdent du côté de leur extrémité un élargissement (34) dépassant le diamètre du montant de guidage (15) .

14. Dispositif de serrage selon une des revendications 1 à 13, **caractérisé en ce que** les branches de guidage (32) du fermoir (29) présentent un prolongement (35) débordant dans la direction de l'arbre d'enroulement de sangle (3) au-delâ des trous allongés en forme de L (33) et reposent par ces prolongements (35) sur la tirette de déverrouillage (30).

15. Dispositif de serrage selon une des revendications 1 à 14, **caractérisé en ce que** les branches de guidage (32) sont reliées l'une à l'autre sur leur face supérieure, en formant un corps de blocage inversement en forme de U, au moyen d'une base en U (36), et que la base en U (36) présente un angle (37) qui constitue une butée pour le montant de guidage (15) lorsque le fermoir (29) se trouve en position de verrouillage.

16. Dispositif de serrage selon une des revendications 1 à 15, **caractérisé en ce que** les branches de guidage (32) présentent à leurs extrémités tournées vers la traverse (16) des alésages alignés (38) et sont grâce à ces alésages (38) positionnées de manière à pouvoir pivoter sur la traverse (16) de section transversale circulaire, par exemple en intercalant un manchon de palier.

17. Dispositif de serrage selon une des revendications 1 à 16, **caractérisé en ce que** le fermoir (29) est comprimé sous la force d'un ressort en position de verrouillage.

18. Dispositif de serrage selon une des revendications 1 à 17, **caractérisé en ce que** le fermoir (29) est installé de manière à pouvoir pivoter sur la traverse, en intercalant au moins un ressort de fermeture (39), par exemple un ressort à hélice.

19. Dispositif de serrage selon une des revendications 1 à 18, **caractérisé en ce que** le fermoir (29) est conçu sous forme d'une pièce métallique d'un seul tenant.

20. Dispositif de serrage selon une des revendications 1 à 19, **caractérisé en ce que** la tirette de déverrouillage (30) est installée dans un guide oblique orienté à l'opposé des prolongements (35) des branches de guidage (32) et est sollicitée par un ou plusieurs ressorts de compression (40) ou comprimée contre les prolongements (35).
